Europäisches Patentamt

European Patent Office

Office européen des brevets

(19)

(11) Veröffentlichungsnummer: **0 324 976**
**A1**

## (12) EUROPÄISCHE PATENTANMELDUNG

(21) Anmeldenummer: 88121666.7

(22) Anmeldetag: 24.12.88

(51) Int. Cl.⁴: **F16T 1/00**

(30) Priorität: 14.01.88 DE 8800358 U

(43) Veröffentlichungstag der Anmeldung:
26.07.89 Patentblatt 89/30

(84) Benannte Vertragsstaaten:
AT BE CH DE ES FR GB IT LI NL SE

(71) Anmelder: **VIA Gesellschaft für**
**Verfahrenstechnik mbH**
**Heerdter Lohweg 63-71**
**D-4000 Düsseldorf 11(DE)**

(72) Erfinder: **Buchholz, Uwe**
**Hanfweg 5**
**D-5000 Köln 41(DE)**
Erfinder: **Hoffmann, Werner**
**Bockmühlstrasse 33**
**D-4050 Mönchengladbach 3(DE)**
Erfinder: **Frischmann, Werner**
**Wilhelmshöhe 37 a**
**D-5810 Witten-Stockum(DE)**

(74) Vertreter: **Stratmann, Ernst, Dr.-Ing.**
**Schadowplatz 9**
**D-4000 Düsseldorf 1(DE)**

(54) **Vorrichtung zum Ableiten von Kondensat und dgl. aus Drucksystemen.**

(57) Es wird eine Vorrichtung zum Ableiten von Kondensat und dgl. aus Druckgassystemen beschrieben, welche Vorrichtung einen Sammelraum (24) für das Kondensat aufweist, der mit zumindest einem Füllstandsmesser (26) und einem von diesem automatisch gesteuerten Auslaßventil versehen ist, wobei der Sammelraum (24) von einem spiral- oder schlangenförmig ausgebildeten Leitungsstück oder Verbindungskanal (140) gebildet wird, dessen unteres Ende in eine Steigleitung (142) (die auch als Kanal ausgebildet sein kann) mündet, und dessen oberes Ende mit der Steigleitung bzw. dem Steigkanal (142) über eine Druckausgleichsleitung oder einen Druckausgleichskanal (152) verbunden ist, wobei der Füllstandsmesser (26) von einem in der Steigleitung (142) angeordneten Fühler (66) gebildet wird, und wobei das eine Ende des Leitungsstücks bzw. des Verbindungskanals (140) mit dem Drucksystem und das andere Ende mit dem Auslaßventil verbunden ist.

## Vorrichtung zum Ableiten von Kondensat und dgl. aus Drucksystemen

Die Erfindung betrifft eine Vorrichtung zum Ableiten von Kondensat und dgl. aus Drucksystemen, insbesondere Druckluftsystemen, die einen Sammelraum für das Kondensat aufweist, der mit zumindest einem Füllstandmesser und einem von diesem automatisch gesteuerten Auslaßventil versehen ist.

Eine derartige Vorrichtung ist aus der DE-PS 31 49 830 bereits bekannt.

Der bekannte Kondensatableiter ermöglicht es bereits in Drucksystemen sich sammelndes Kondensat (das eine Emulsion aus Öl und kondensierter Feuchtigkeit darstellt) unter Ausnutzung der Druckenergie, jedoch ohne unerwünschte Verluste des Druckmediums und ohne ständige Überwachung durch Personal vollautomatisch abfließen zu lassen, wobei dieser Stand der Technik bereits zur Erlangung eines möglichst störungsfreien Betriebes auf bewegliche Komponenten, insbesondere auf drehbar gelagerte Teile verzichtet, abgesehen von dem naturgemäß bewegliche Teile umfassenden Auslaßventil.

Die bekannte Vorrichtung hat aber noch Nachteile. Ein wesentlicher Nachteil ist darin zu sehen, daß die Zeit, die vom Zeitpunkt des Öffnens des Auslaßventils, gesteuert von dem Füllstandsmesser, bis zum Entleeren des Sammelraums für das Kondensat vergeht, verhältnismäßig kurz ist, was es schwierig macht, das Aulaßventil so rechtzeitig wieder zu schließen, daß zwar im wesentlichen das gesamte Kondensat über das Auslaßventil abgegeben wird, aber möglichst noch kein Druckmedium, also z. B. Druckluft. Die Abgabe von Druckmedium kann, falls es sich um einen aggressiven Stoff handelt, umweltschädigend sein. Im Falls von Druckluft ist es störend, daß mit dem Austreten von Druckluft sehr starke Geräuschentwicklung verbunden ist.

Ein weiterer Nachteil der bekannten Einrichtung ist ihr recht komplizierter, aus vielen Teilen bestehender Aufbau, was die Herstellung deutlich verteuert.

Ein noch anderer Nachteil ist die Schwierigkeit, bei dem bekannten Gerät durch optische Inspektion die korrekte Funktion zu überprüfen. Stattdessen sind beim Stand der Technik komplizierte elektronische Vorrichtungen anzuordnen, die selbst wieder störanfällig sind.

Die aus Metalldruckguß hergestellte bekannte Einrichtung hat außerdem noch den Nachteil, daß bei infolge von Entspannungsvorgängen eintretender Abkühlung außen auf der Anordnung sich Umgebungsfeuchtigkeit in Form von Wassertröpfchen niederschlagen kann, was bei bestimmten Anwendungsfällen störend ist.

Aufgabe der Erfindung ist es, die Vorrichtung der eingangs genannten Art dahingehend weiterzubilden, daß die Zeit, die das Kondensat zum Abfließen benötigt, durch Reibung und Wirbelbildung in der Kondensatflüssigkeit verlängert wird und dadurch der Zeitpunkt leichter festgelegt werden kann, zu dem zwar das Kondensat weitgehend abgeflossen ist, aber noch kein Druckmedium augepreßt wird. Desweiteren sollte die Vorrichtung derart ausgestaltet sein, daß bei Bedarf auch eine optische Überwachung der einwandfreien Funktion der Vorrichtung möglich ist.

Außerdem sollte die Vorrichtung einfacher als der Stand der Technik aufgebaut sein, beispielsweise ohne metallische Druckgußteile, pneumatischen Ventilkammern und ähnlichem auskommen.

Gelöst wird die Aufgabe durch die kennzeichnenden Merkmale des Hauptanspruchs, also dadurch, daß der Sammelraum von einem spiral- oder schlangenförmig ausgebildeten Leitungsstück oder Verbindungskanal gebildet wird, dessen unteres Ende in eine Steigleitung (die auch als Kanal ausgebildet sein kann) mündet, und dessen oberes Ende mit der Steigleitung (bzw. dem Steigkanal) über eine Druckausgleichsleitung (oder auch wiederum Druckausgleichskanal) verbunden ist, daß der Füllstandsmesser von einem in der Steigleitung oder dem Steigrohrkanal angeordneten Fühler gebildet wird, und daß das eine Ende des Leitungsstücks oder des Verbindungskanals mit dem Drucksystem und das andere Ende mit dem Auslaßventil verbunden ist.

Durch diese Maßnahmen, insbesondere durch den spiral- oder schlangenförmig ausgebildeten Sammelraum, satt des vom Stand der Technik vorgesehenen kesselförmigen Sammelraums, ergibt sich für die Kondensatflüssigkeit während des Ausfließvorganges nicht nur ein längerer Weg, sondern durch die spiral-oder schlangenförmig ausgebildete Fließbewegung auch eine Verwirbelung und damit nicht nur eine höhere Reibung an den Leitungs- bzw. Kanalwänden, sondern auch eine erhöhte innere Reibung, wodurch das Ausfließen einer bestimmten Flüssigkeitsmenge wesentlich mehr Zeit in Anspruch nimmt, als es bei der Einrichtung gemäß dem Stand der Technik der Fall ist. Dies ist vorteilhaft, weil dadurch es wesentlich einfacher ist, das Aulaßventil zu einem Zeitpunkt wieder zu schließen, zu dem zwar im wesentlichen das gesamte Kondensat abgeflossen ist, aber noch kein Druckmedium ausgepreßt wurde. Dies hat den Vorteil, daß einerseits kein Druckmedium verloren geht bzw. an die Umwelt gelangt, andererseits das Geräusch, das mit dem Austreten von Druckmedium jeweils verbunden wäre, vermieden werden kann.

Die Konstruktion ist auch wesentlich einfacher als beim Stand der Technik, da auf komplizierte Metalldruckgußteile und noch andere Einzelteile, wie sie der Stand der Technik notwendigerweise einsetzt, hier verzichtet werden kann.

Außerdem ermöglicht die neuartige Konstruktion Ausführungsformen, die weitere Vorteile bringen. So kann gemäß einer Ausführungsform das eine Ende des Leitungsstücks oder des Verbindungskanals mit dem ersten Anschluß eines Verteilerstücks verbunden sein, dessen zweiter Anschluß zum Auslaßventil führt und dessen dritter Anschluß mit der Steigleitung in Verbindung steht. Alternativ kann das Verteilerstück ein Kreuzverteilerstück mit vier Anschlüssen sein und der sich dadurch ergebende vierte Anschluß mit einem Blindstopfen versehen sein. Durch diese Maßnahmen wird ohne wesentliche Verkomplizierung der Gesamtanordnung eine außerordentliche Vielgestaltigkeit der Anwendungsmöglichkeiten erreicht.

Gemäß einer noch anderen Ausführungsform ist das Leitungsstück oder der Verbindungskanal und die Steigleitung (bzw. der Steigrohrkanal) aus Rohrmaterial einstückig geformt oder aus zwei aufeinanderlegbaren Halbschalen gebildet. Beide Versionen ergeben ein besonders einfaches Herstellungsverfahren, wobei die Verwendung von zwei Halbschalen für die industrielle Massenfertigung besonders gut geeignet ist und auch ein besonders kompaktes, ästhetisch ansprechendes Äußeres ergibt.

Wird bei der Ausführungsform mit spiralförmig aufgewickelten Leitungsstück der Steigleitung innerhalb des von den Windungen des spiralförmig aufgewickelten Leitungsstück gebildten Zylinders angeordnet, ergeben sich auf bei dieser Ausführungsform Raumeinsparungen.

Die Herstellung wird verbilligt, wenn das Rohrmaterial oder das Material, aus dem die Halbschalen bestehen, schlagfester Kunststoff, wie Polyvenylchlorid (PVC) bzw. Polycarbonat ist. Die Steigleitung könnte zumindest im Bereich des Fühlers transparent ausgebildet sein, um so eine optische Überwachung der einwandfreien Funktion der Anordnung zu erleichtern. Von Vorteil ist, wenn der Fühler ein Wärmefühler ist, der von oben in die Steigleitung hineinragt. Ein Wärmefühler hat sich als besonders robust erwiesen, obwohl auch andere, ein elektrisches Signal liefernde Fühler eingesetzt werden können, wie beispielsweise Fühler, bei denen infolge Änderung seiner z. B. elektrischen Leitfähigkeit, Induktivität oder Kapazität ein elektrisches Strom- oder Spannungssinal erzeugt wird oder wobei das Signal in einer Änderung einer Wechselspannungsfrequenz besteht. Derartige Fühler sind an sich bekannt, siehe die DE-AS 12 52 430, DE-PS 449 533 und DE-PS 845 713.

Zur weiteren Geräuschdämmung wie auch zur Wärmeisolierung kann es außerdem günstig sein, die gesamte Anordnung in isolierendes Material, wie Schaumstoff, einzuhüllen. Feste Schaumstoffe, wie Styropor oder ähnliches, haben aber nicht nur wärmeisolierende und schalldämpfende Eigenschaften, sie erhöhen auch die mechanische Stabilität der Gesamtanordnung.

Zur weiteren Verbilligung der Anordnung kann ggf. auch das Magnetventil hinsichtlich seines Ventilgehäuses, Ventilsitzes und Ventilkolbens aus Kunststoff gefertigt sein. Infolge des höheren Strömungswiderstandes beim Ablassen des Kondensats wird nämlich die Stoß- und Druckbelastung des Magnetventils verringert, was nicht nur die längere Herausblaszeit und damit die genauere Steuerung ermöglicht, sondern auch zu einer längeren Lebensdauer des Magnetventils führt bzw. die Verwendung von Kunststoff für dieses Magnetventil überhaupt erst ermöglicht.

Die erfindungsgemäße Vorrichtung besitzt wesentlich weniger Gewicht als die Vorrichtung gemäß dem Stand der Technik. Der schwerste Teil ist bei der erfindungsgemäßen Vorrichtung das Magnetventil, so daß es auch günstig ist, daß dieses Magnetventil am unteren Ende der spiralförmigen Leitung bzw. der spiralförmigen Kanals angeordnet ist. Infolge des verhältnismäßig geringen Gewichtes der Gesamtanordnung kann auch meist auf zusätzliche Befestigungseinrichtungen verzichtet werden, was bedeutet, daß die Vorrichtung lediglich von dem Anschluß getragen wird, der das Kondensat aus dem Drucksystem abführen soll. Werden zusätzliche Befestigungen gewünscht, können bei Umschäumen der Anordnung entsprechende Befestigungsmittel im Hartschaum vorgesehen werden, oder aber auch entsprechende Befestigungseinrichtungen in den Halbschalen. Das obere Rohrende könnte eine Befestigungseinrichtung aufweisen, mit der der Ableiter an geeigneter Stelle aufhängbar wäre.

Durch die automatische Steuerung, die hier vorzugsweise elektronisch erfolgt, läßt sich auch eine elektronische Auswerteinrichtung vorsehen, die die Häufigkeit der Ausblasvorgänge und sonstige statistische Daten erfassen könnte. Eine derartige elektronische Auswerteinrichtung wie auch andere, für die elektrische Steuerung vorgesehene Ausrüstungen können separat an anderer Stelle angeordnet werden, oder aber, falls die Anordnung aus Halbschalen besteht, in einen von den beiden Halbschalen gebildeten, nach oben offenen Aufnahmeraum, auf dem noch ein Schutzdeckel aufsetzbar ist. Damit wird die Gesamtanordnung zu einer sehr kompakten, leicht zu kontrollierenden und zu wartenden Anordnung.

Zum Zu- und Abführen der elektrischen Signale bzw. von elektrischer Betriebsenergie ist es außerdem günstig, wenn zumindest die eine Halbschale im Bereich einer Aufnahmeraumwandung einen Durchbruch für eine Kabeldurchführungsmuffe oder dgl. aufweist. Dies ist günstiger, als beispielsweise im Deckel einen entsprechenden Durchbruch vorzusehen, weil dadurch die Deckelabnahme erleichtert wird.

Es ist günstig, die beiden Halbschalen symmetrisch aufzubauen und in diesem Falle ist es günstig, jede Halbschale im Bereich einer Aufnahmeraumwandung den erwähnten Durchbruch zu geben.

Die elektronische Auswerteeinrichtung, wie sie weiter oben erwähnt wurde, wie auch andere, für die elektrische Steuerung vorgesehenen Ausrüstungen können aber auch separat an anderer Stelle angeordnet werden, beispielsweise an einer zentralen Stellwarte.

Die beiden Halbschalen bestehen vorzugsweise aus glasklarem Polycarbonat und sind miteinander verklebt oder verschweißt. Die Erfindung betrifft auch ein Verfahren zum Ableiten von Kondensat und dgl. aus unter Druck stehenden Systemen, wie Druckluftsystemen, wobei das Kondensat in einem Sammelraum mit Füllstandsmesser und Auslaßventil unter Druck stehend gesammelt und bei Erreichen eines vorbestimmten Füllstandes durch Öffnen des Auslaßventils infolge des Systemdruckes aus dem Sammelraum ausgestoßen wird, wobei dieses Verfahren aus der DE-PS 31 49 830 bereits bekannt ist.

Zur Erlangung einer längeren Ausströmungsdauer - ohne Gefahr der Verstopfung an Engstellen oder Düsenbereichen durch im Kondensat mitgeschleppten Feststoffen, welche Engstellen oder Düsenbereiche ebenfalls zur Erhöhung der Ausströmungsdauer verwendet werden könnten - wird erfindungsgemäß das Kondensat beim Ausströmen aus dem Sammelraum entlang einem spiral- oder schlangenförmigen, im wesentlichen gleichbleibenden Strömungsquerschnitt aufweisenden Strömungsweg zum Auslaßventil geführt. Dabei kann der Strömungsweg zweckmäßigerweise - zumindest teilweise - auch zum Sammeln von Kondensat dienen. Günstig ist es auch, wenn der Strömungsweg im Prinzip aus einem oder mehreren, in Richtung der Schwerkraft geneigten Strömungsweg oder Strömungswegabschnitten besteht.

Die Erfindung wird nachfolgend anhand von Ausführungsbeispielen näher erläutert, die in den Zeichnungen dargestellt sind.

Es zeigt:

Fig. 1 schematisch eine erfindungsgemäße Vorrichtung zum Ableiten von Kondensat aus einem Kältetrockner;

Fig. 2 eine ähnliche Anordnung zum Ableiten von Kondensat aus einem Speicherkessel;

Fig. 3 eine ähnliche Anordnung zur Entwässerung eines Druckluftleitungsnetzes an einem tiefen Punkt dieses Leitungsnetzes;

Fig. 4 in einer annähernd maßstäblichen Ansicht von der Seite eine erste Ausführungsform der erfindungsgemäßen Vorrichtung;

Fig. 5 ebenfalls in einer Seitenansicht einen bei der Anordnung gemäß Fig. 4 verwendbaren Sensor zur Ermittlung des Erreichens eines bestimmten Flüssigkeitsspiegels innerhalb des Steigrohrs;

Fig. 6 in einer Schnittansicht (entsprechend einer Ansicht auf die eine Halbschale) eine andere, aus zwei Halbschalen gebildete Ausführungsform der erfindungsgemäßen Vorrichtung zum Ableiten von Kondensat; wobei die Fig. 6 eine Schnittansicht längs der Linien VI-VI der Fig. 7 ist;

Fig. 7 eine Ansicht von rechts auf die Vorrichtung gemäß Fig. 6;

Fig. 8 eine Schnittansicht entlang der Pfeile VIII-VIII der Fig. 7 (um 90° gedreht);

Fig. 9 eine Ansicht auf einen Deckel für den Aufnahmeraum für eine elektronische Steuereinheit;

Fig. 10 eine Seiten- bzw. Schnittansicht durch diesen Deckel;

Fig. 11 eine vergrößerte Schnittdarstellung entlang der Pfeile XI-XI der Fig. 9; und

Fig. 12 in einer ähnlichen Darstellung wie Fig. 6 eine etwas abgewandelte Ausführungsform mit vergrößerter Zahl von Verbindungskanalmäanderschleifen.

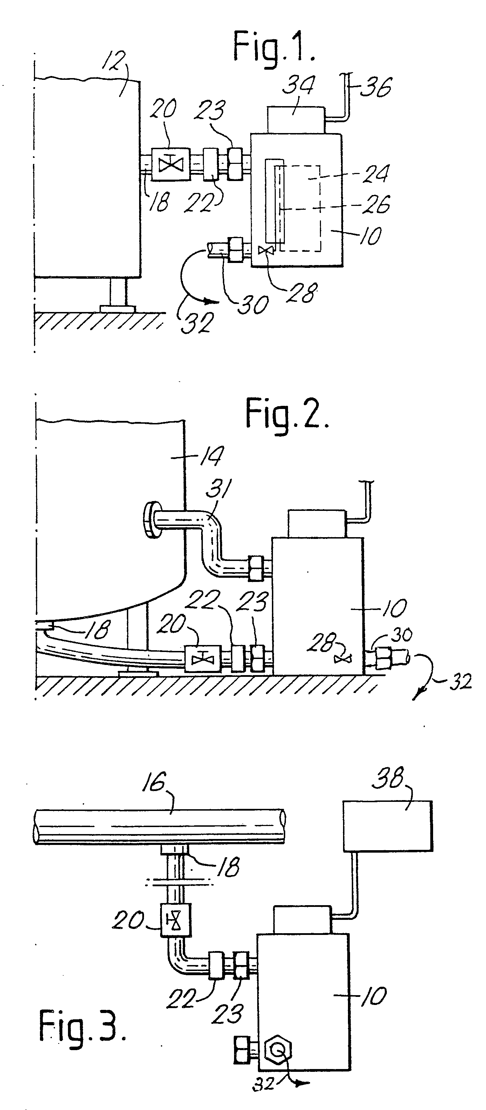

In den Fig. 1 bis 3 wird schematisch jeweils eine Vorrichtung 10 zum Ableiten von Kondensat oder dgl. aus einem Drucksystem dargestellt, gemäß Fig. 1 in Form eines Kältetrockners 12, gemäß Fig. 2 in Form eines Speicherkessels 14 und gemäß Fig. 3 in Form eines tiefen Punktes in einem Leitungsnetz 16. An diesen Stellen fällt Kondensat an, meist in der Form von Öl-/Wasseremulsion, die auch noch mit Schmutz versetzt sein kann. Diese Emulsion muß von Zeit zu Zeit entfernt werden, was vorzugsweise entweder in periodischen Abständen erfolgt oder, was günstiger ist, bei Erreichen einer bestimmten Kondensatmenge. Die Vorrichtung 10 ist an der entsprechenden Ableitungsstelle 18, an der meist noch ein Absperrventil 20 vorgesehen ist, über eine Anschlußmuffe oder -verschraubung 22, 23 angeschlossen. Die Ableitungsstelle liegt so, daß die Öl-/Wasseremulsion mit natürlichem Gefälle in die Vorrichtung zum Ableiten von Kondensat, im folgenden auch Kondensatableiter genannt, fließen kann.

Innerhalb des Kondensatableiters befindet sich ein Sammelraum 24, der mit einem Füllstandsmesser 26 versehen ist, in Fig. 1 nur schematisch als Block dargestellt.

Wird eine bestimmte Kondensathöhe in dem Sammelraum 24 erreicht, gibt der Füllstandsmesser ein Steuersignal an ein Auslaßventil 28 ab, woraufhin dieses sich in Richtung auf eine Abflußleitung 30 öffnet und das Kondensat aufgrund des auf dem Spiegel der Kondensatflüssigkeit lastenden Druckes des Drucksystems durch das Ventil 28 und die Abflußleitung 30 aus dem Kondensatableiter 10 ausgepreßt wird, siehe Pfeil 32.

Bei der erfindungsgemäßen Einrichtung öffnet sich das Ventil 28 für einen bestimmten, ggf. auch einstellbaren Zeitraum von beispielsweise 1...3 Sekunden, in welcher Zeit bei bestimmten Druckverhältnissen und bestimmter Viskosität des Kondensats eine ganz bestimmte Menge Kondensat ausgestoßen werden kann, wobei die Zeit so einstellbar ist, daß gerade knapp soviel Kondensat ausgestoßen wird, wie sich bis zum Auslösen des Ventils in dem Kondensatableiter angesammelt hat.

Es können entsprechende elektronische Steuerungen zusätzlich vorgesehen sein, beispielsweise in Form eines Aufsatzes 34, die über ein Kabel 36 auch mit an anderem Ort angebrachten elektronischen Überwachungseinrichtungen verbunden sein können, um so beispielsweise zentral die Funktion von zahlreichen Kondensatableitereinheiten zu überwachen und statistisch auswerten zu können.

In Fig. 1 wird der Sammelraum 24 über eine am oberen Ende angeschlossene Zuflußleitung oder Ableitungsstelle 18 gefüllt, entsprechendes gilt auch für die Ausführungsform gemäß Fig. 3. Bei der Ausführungsform gemäß Fig. 2 erfolgt die Füllung über einen unteren ersten Anschluß zum Sammelraum, der Abfluß über einen zweiten, hier nach rechts herausgeführten weiteren Anschluß, bei dem auch dann das Auslaßventil 28 angeordnet ist. Diese Form der Kondensatzufuhr zum Sammelraum ist hier wegen des tiefliegenden Abflußbereiches des Kondensats aus dem Kessel 14 erforderlich. Der Druck des Kessels lastet gleichwohl auf dem Kondensatspiegel innerhalb des Sammelbehälters, und zwar zugeführt über die Leitung 31 zum oberen Anschluß des Sammelraums 24.

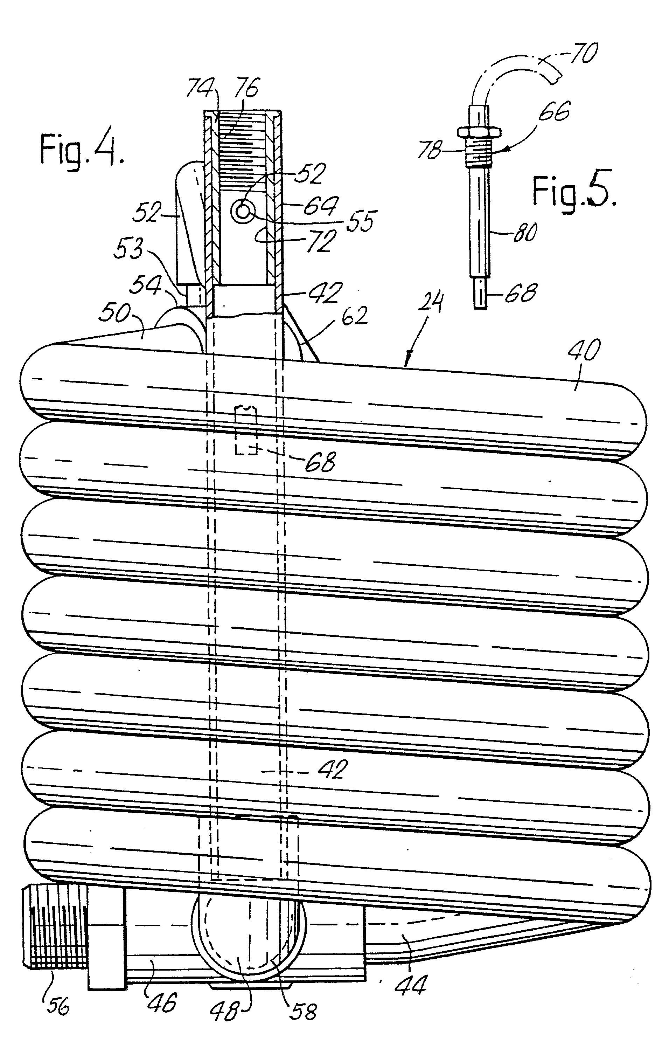

Es sei nun näher auf die Einzelheiten der erfindungsgemäßen Vorrichtung eingegangen, wobei in der Fig. 4 eine Ansicht auf einen Sammelraum 24 wiedergegeben ist, der die Form eines spiralförmigen aufgewickelten Leitungsstücks 40 hat. Das untere Ende 44 dieses spiralförmigen Leitungsstücks mündet - über ein Verzweigungsstück 46 und ein Winkelstück 48 - in eine Steigleitung 42, während das obere Ende 50 über eine Druckausgleichsleitung 52 mit dieser Steigleitung 42 in Druckverbindung steht. Es ist zweckmäßig, auch das obere Ende 50 in ein Winkelstück 54 übergehen zu lassen, das eine geeignete Verschraubung oder Anschlußmuffe tragen kann, beispielsweise wie sie in Fig. 1 mit 23 bezeichnet wurde. Das Winkelstück 54 kann zweckmäßigerweise auch einen Ansatz 53 für die Druckausgleichsleitung 52, die aus flexiblem Rohrmaterial bestehen sollte, aufweisen, wie Fig. 4 erkennen läßt. Auch die Steigleitung 42 weist einen Ansatz 55 auf, auf den ein eine Spiralwindung bildendes Schlauchstück 52 aufgeschoben und in geeigneter Weise gegen Abrutschen gesichert ist. Statt dem Schlauchstück 52 kann auch ein entsprechendes Rohrstück direkt in passende Bohrungen in der Wand von Steigleitung 42 bzw. Winkelstück 48 oder Leitungsstück 40 eingeschweißt oder eingeklebt sein.

Alle bis jetzt beschriebenen Teile können zwar aus Metall bestehen, günstig ist aber die Herstellung aus Kunststoff, beispielsweise aus transparenten Polyvenylchlorid (insbesondere gilt dies für das Steigrohr 42), oder auch aus "grauem" Polyamid, das eine etwas höhere Festigkeit als transparentes Polyvenylchlorid besitzt und besonders geeignet ist für das spiralförmig aufgewickelte Leitungsstück 40. Die Winkelstücke 54 bzw. 46 können ebenfalls aus Kunststoff bestehen, wobei die Verbindung zwischen den einzelnen Teilen durch Verschweißen oder Verkleben erfolgen kann.

Vom unteren Verzweigungsstück 46 gehen nicht nur das Winkelstück 48 für die Steigleitung 42 aus, sowie das untere Ende 44 der spiralförmig aufgewickelten Leitung 40, sondern auch zwei weitere Anschlußstutzen 56 bzw. (verdeckt) 58. Der Anschlußstutzen 58 ist bei der hier dargestellten Ausführungsform nicht benutzt und daher mit einem Blindstopfen verschlossen, während an dem Anschluß 56 das Auslaßventil 28 (siehe Fig. 1) angeschlossen werden kann, in Fig. 4 nicht dargestellt.

Alternativ kann das Auslaßventil auch an den Anschluß 58 angebracht werden, in welchem Falle der Anschluß 56 mit einem Blindverschluß abgeschlossen wäre.

Die Anschlüsse 56, 58 und 62 gemäß Fig. 4 sind alle als Zuflußanschlüsse für das Kondensat geeignet. Das Auslaßventil 28 ist aber immer unten angeordnet, also beispielsweise am Anschlußstutzen 56 oder 58 angebracht.

Derartige unterschiedliche Anschlußmöglichkeiten sind von besonderem Vorteil bei solchen Anordnungen, wo der Ablauf des Kondensats sehr tief liegt, wie beispielsweise bei dem in Fig. 2 dargestellte Druckbehälter 14. Für diesen Fall ist es auch besonders günstig, wenn das Verzweigungstück 46 eine Vierfachverzweigung ist, weil dann, bei Anschluß des Stutzens 56 an die Ablaufleitung des Kessels 14, der Anschlußstutzen 56 in eine andere Richtung (parallel zur Kesselwand, nicht in Richtung auf die Kesselwand) weist, so daß der Kondensatableiter 10 sehr nahe an dem Kessel 14 aufgestellt werden kann. Es ist eine Druckausgleichsleitung 31 zum Kessel vorzusehen, die mit dem Anschluß 62 in Verbindung steht. Auch diese liegt dann parallel zur Kesselwand.

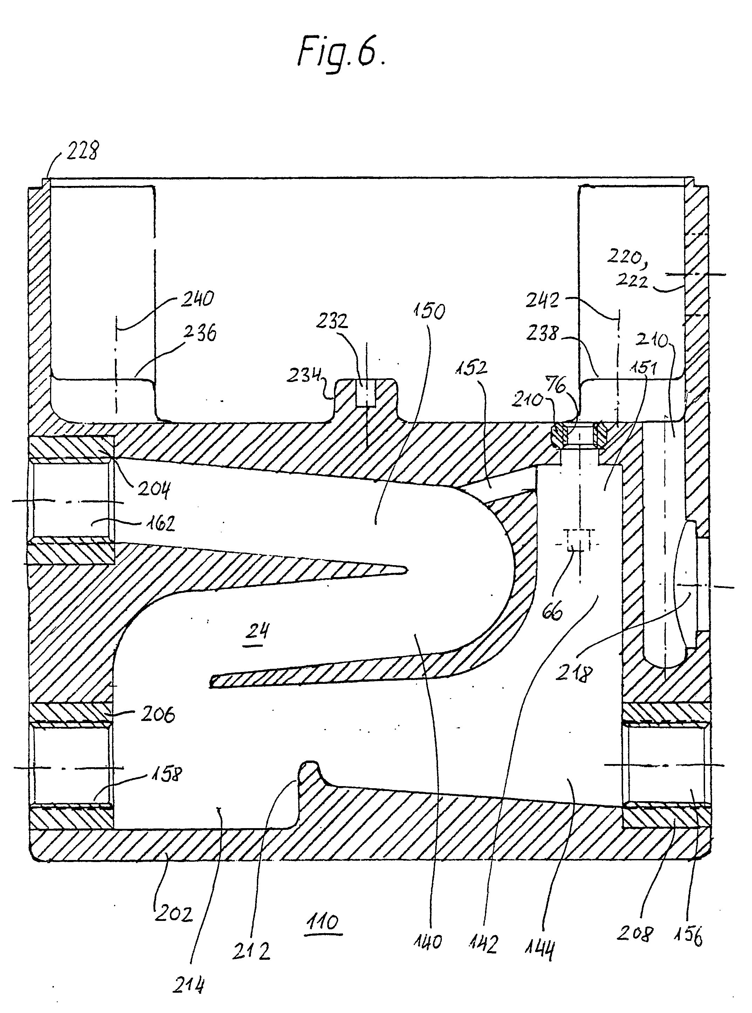

Um sicherzustellen, daß bei einer bestimmten Füllstandhöhe des als Sammelraum wirkenden spiralförmig aufgewickelten Leitungsstücks 40 das Auslaßventil 28 für eine bestimmte Zeitdauer geöffnet wird, ist in das obere Ende 64 der Steigleitung 42 ein Sensor 66 einführbar, der in Fig. 5 in einer Seitenansicht (bezüglich Fig. 4 mit nur halb so großem Maßstab) dargestellt ist. Sobald der Flüssigkeitsspiegel in den Windungen des Leitungsstückes 40 und damit auch in dem Steigrohr 42, das infolge der Druckausgleichsleitung 52 die gleiche Flüssigkeitshöhe besitzt, das untere Ende 68 des Sensors 66 berührt und umspült, gibt dieser Sensor ein Auslösesignal beispielsweise über ein Kabel 70 an eine entsprechende Steuereinrichtung ab, die wiederum daraufhin für eine vorbestimmte, einstellbare Zeitdauer das Auslaßventil 28 öffnet, so daß für diese vorbestimmte Zeitdauer die Kondensatflüssigkeit unter Wirkung des Betriebsdruckkes des Druckluftsystems über das Auslaßventil 28 und die Abflußleitung 30 ausgeblasen wird, wobei die Einstellung dieser Öffnungszeit für das Ventil 28 so gewählt werden kann, daß das Ventil 28 wieder geschlossen wird, sobald etwa 90 bis 95 % des Flüssigkeitsstranges innerhalb des leitungsförmigen Sammelraums 40 aus dem Ventil ausgetreten sind. Ein geringer Flüssigkeitsrest, der genau eingestellt werden kann, verhindert, daß Druckmedium ebenfalls austritt.

Ein als Druckausgleichsverbindung dienender Raum 72 wird gebildet durch einen Einsatz 74, vorzugsweise aus Kunststoff, der in das obere Ende 64 der Steigleitung 42 eingeschoben und verklebt ist und an seinem oberen Ende mit einem Innengewinde 76 versehen ist, während das untere Ende geringfügig aufgebohrt ist und dadurch einen Abstand zum Mantel 80 des mittleren Teils des Sensors 66 bildet, wenn dieser Sensor 66 mit seinem Einschraubgewinde 78 in den Einsatz 74 eingeschraubt wird. Das Gewinde 78 des Sensors 66 hat etwa die Länge des Innengewindes 76, und mittels entsprechenden Dichtungseinrichtungen läßt sich der Sensor 66 somit druckdicht in die Steigleitung 42 einführen.

Aus Platzgründen ist das Steigrohr 42 innerhalb des von den Windungen 40 gebildeten Zylinders angeordnet. Da die Steigleitung 42 bei der dargestellten Ausführungsform mit der spiralförmig aufgewickelten Leitung 40 nicht einstückig ist, sondern über entsprechende Verbindungsstücke 48, 46, 54, 52 in Verbindung steht, ist es ohne Probleme möglich, diese beiden Leitungen aus unterschiedlichem Material zu fertigen, beispielsweise die spiralförmig aufgewickelte Leitung 40 aus besonders widerstandsfähigem grauen Polystyrol und die Steigleitung, die weniger beansprucht wird, da dort keine so hohen Strömungsgeschwindigkeiten erreicht werden, aus durchsichtigem Polystyrol. Dadurch wird es möglich, rein optisch die Funktion des Kondensatableiters zu überprüfen, beispielsweise, ob der Sensor 66 in korrekter Weise ein Auslösesignal gerade dann abgibt, wenn seine Spitze 78 vom Flüssigkeitsspiegel berührt wird, und ob die gewünschte Restmenge an Kondensat noch in der Leitung 40 bzw. der Steigleitung 42 nach erneutem Schließen des Ventils verbleibt.

Sollte sich mit der Zeit Schmutz an den Innenwänden der Steigleitung 42 absetzen, könnte bei Herausschrauben des Sensors 66 mit einem Reinigungsgerät eine Säuberung vorgenommen werden.

Bei vielen Anwendungsfällen kann allerdings auf eine derartige Überwachung verzichtet werden. Wenn zudem eine besonders weitgehende Geräuschdämmung erwünscht ist, kann die in Fig. 4 dargestellte Anordnung mit einem Kunststoffschaum umschäumt werden, was zum einen der gesamten Anordnung eine größere innere Stabilität gibt, zum anderen eine Geräuschdämmung bewirkt, und schließlich auch eine Wärmedämmung ermöglicht, so daß nicht etwa sich an den Außenflächen der spiralförmigen Leitung 40 Umgebungsfeuchtigkeit niederschlägt, falls durch Entspannungsvorgänge oder durch kaltes, von Kältetrocknern kommendes Kondensat diese Windungen sich stark abkühlen sollten.

Der Sensor 66 arbeitet vorzugsweise als thermischer Sensor, wobei er beispielsweise an seinem unteren Ende einen Fühler besitzt, der durch eine Heizspirale auf beispielsweise 80°C aufgeheizt wird. Wenn nun durch ein Eintauchen der Spitze 68 in Kondensatflüssigkeit innerhalb einer Zeitdauer von z. B. 100 oder 120 ms eine Temperaturänderung von 1°C (den vorherigen Wert überschreitend oder unterschreitend) auftritt, wird elektronisch ein Signal ausgelöst, das eine Auswerteelektronik zugeführt wird, die wiederum einerseits das Ventil 28 öffnet, andererseits einen einstellbaren Zeitgeber auslöst, der nach der eingestellten Zeit, beispielsweise einer Sekunde, ein weiteres Signal abgibt, das das Ventil 28 wieder schließt. Gleichzeitig könnten die Signale auch für andere Zwecke ausgewertet werden. So könnte ein Warnsignal abgegeben werden, wenn aus irgendwelchen Gründen das Ausblasventil 28 offen bleibt, oder der Sensor 68 weiterhin in Flüssigkeit taucht oder Störungen in der Elektronik selbst feststellbar sind. Anstelle eines Sensors, der wie hier geschildert, als thermischer Differenzschalter in beide Temperaturrichtungen arbeitet, könnten auch optische Meßeinrichtungen vorgesehen werden, oder auch kapazitive Einrichtungen, oder sogar Ultraschallmeßeinrichtungen. Die thermische Anordnung hat sich jedoch als besonders robust und für die hier anfallenden, Öle und Verschmutzungen enthaltenden Kondensate als besonders geeignet erwiesen.

In Fig. 6 ist eine andere Ausführungsform eines Kondensatableiters dargestellt, der die Bezugszahl 110 trägt und der wiederum einen Sammelraum 24 für das Kondensat aufweist, der hier jedoch nicht als spiralförmiges Leitungsstück, sondern als schlangenförmiger (mäandrierender) Verbindungskanal 140 gebildet wird. Das untere Ende 144 dieses Verbindungskanals 140 mündet in eine Steigleitung oder in einen Steigrohrkanal 142, und dessen oberes Ende 151 ist mit der Steigleitung 142 über einen Druckausgleichskanal 152 verbunden. Als Füllstandsmesser dient wieder ein in der Steigleitung bzw. dem Steigrohrkanal 142 angeordneter Fühler 66 (nur die Spitze ist gestrichelt dargestellt), der ähnlich wie bei der Darstellung gemäß Fig. 4 und 5 von oben in eine mit einem Gewinde 76 versehene Bohrung eingeschraubt werden kann und mit einem Anschlußkabel in einen nach oben offenen Aufnahmeraum 200 hineinreicht, in welchen eine elektronische Steuereinheit eingesetzt werden kann, wie sie mit 34 in Fig. 1 und mit 38 in Fig. 3 bezeichnet ist. Wie bei der in Fig. 4 dargestellten Ausführungsform ist auch hier das eine Ende des Leitungsstücks, hier des Verbindungskanals 140 mit dem Drucksystem und das andere mit dem Auslaßventil verbunden, wobei beim Anschluß gemäß Fig. 1 in einen Verschraubungsteil 162 gemäß Fig. 6 ein Anschluß oder eine Verschraubung 23 einsetzbar ist, während am unteren Ende ein Anschluß 156 und ein weiterer Anschluß 158 sich gegenüberliegend vorgesehen sind, wobei an den einen Anschluß gemäß Fig. 2 ebenfalls eine Kondensatzuführleitung und an den anderen Anschluß, z. B. 156, das Abblasventil anschließbar ist. Das Verteilerstück 46 gemäß Fig. 4 ist hier also durch entsprechende Formung des Gehäuses 202 verwirklicht, in dem dieses Gehäuse die beiden unteren Anschlüsse 158 bzw. 156 für das Einschrauben von Verschraubungen aufweist.

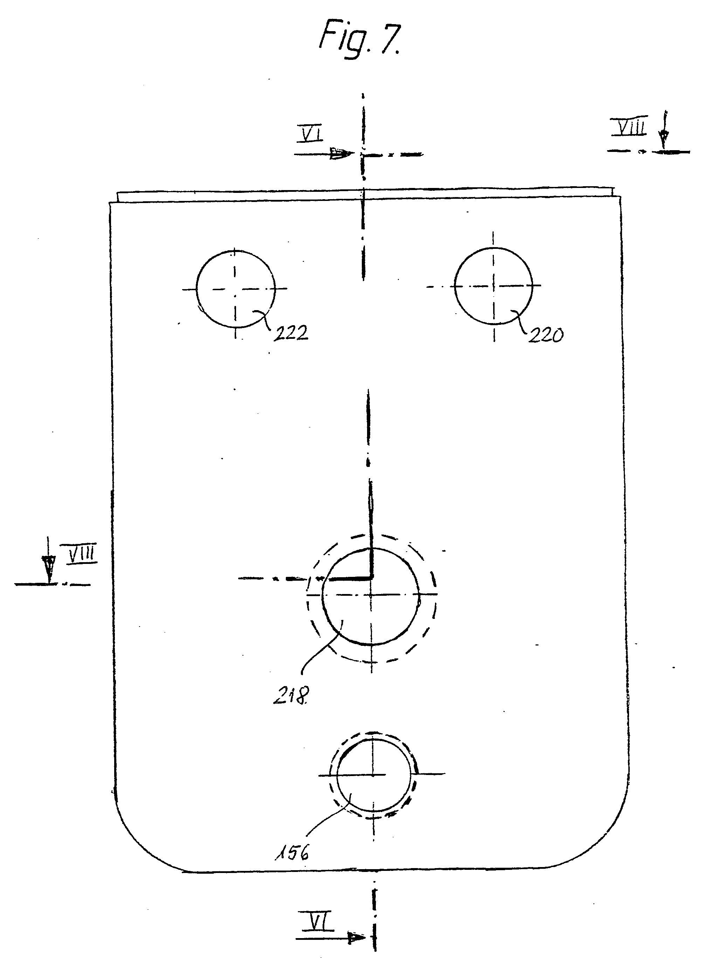

Um dieses Gehäuse auf einfache Weise bilden zu können, ist es zweckmäßig, es aus zwei aufeinanderlegbaren Halbschalen zu bilden, die beispielsweise an der in Fig. 7 dargestellten Schnittlinie VI-VI geteilt und aufeinandergelegt sind, ggf. unter Zwischenlage einer entsprechenden Dichtung. In die Halbschalen lassen sich dann die entsprechenden Hohlräume zur Bildung einerseits der Verschraubungsanschlüsse 162, 158, 156, des mäanderförmigen Kanals 140, des Verbindungskanals 152, der Bohrung mit dem Gewinde 76 sowie des Aufnahmeraums 200 für die Elektronik.

Um die Verschraubungen druckdicht zu machen, ist es meistens günstig, zusätzliche Einsätze 204, 206, 208, 210 vorzusehen, die gleichzeitig in die beiden Schalenhälften hineinreichen und mit diesen entweder wiederum über Dichtungsmaterial druckdicht verbunden sind oder auch eingeklebt werden können, wobei dann auch die beiden Schalenhälften miteinander verklebt werden. Statt Verklebung ist auch Verschweißung möglich.

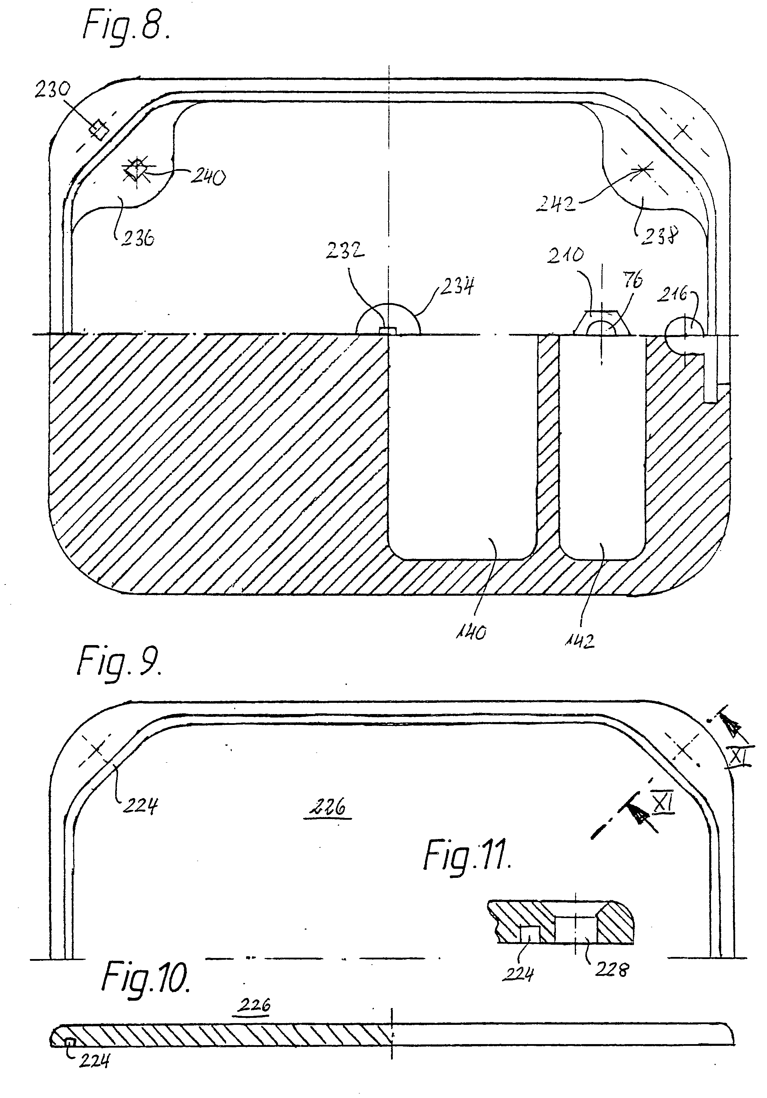

Der mäanderförmige Kanal 140 ist vorzugsweise, zur Vergrößerung des Aufnahmevolumens, in Form eines mäanderer breiten Bandes ausgebildet, wie die Fig. 8, untere Hälfte erkennen läßt. Die untere Hälfte von Fig. 8 stellt einen Schnitt in der linken Hälfte der Fig. 7, siehe Pfeil VIII dar und zeigt zum einen den im wesentlichen rechteckigen Querschnitt der Steigleitung 142 sowie den ebenfalls im wesentlichen rechteckigen Querschnitt des mäandrierenden Kanals 140. Dem gegenüber kann der Verbindungskanal 152 eine wesentliche kleinere Querschnittsfläche haben und beispielsweise runden Querschnitt aufweisen.

Wie Fig. 6 außerdem erkennen läßt, ist das untere Ende des Sammelraums 24 mit einer Stufe 212 versehen, die auf ihrer linken Seite einen Sumpf 214 bildet, der nützlich ist dann, wenn der Anschluß 162 die Zufuhr für Kondensat bildet und der Anschluß 158 die Abfuhr für das Kondensat. Der rechtsgelegene Raum wird dann vorwiegend nur Flüssigkeit und keine Feststoffe enthalten, was für die Flüssigkeitssensorwirkung von Nutzen sein kann. Bei anderer Anschlußweise verliert der Sumpf 214 seine Bedeutung, die Gesamtanordnung bleibt aber voll funktionsfähig, allerdings ohne die letztgenannten Vorteile.

Wie die Fig. 6 weiterhin erkennen läßt, ist noch ein weiterer Kanal 216 vorgesehen, der vom Aufnahmeraum 200 für eine elektronische Schaltung zu einem Anschlußdurchbruch 218 führt, an dem eine Verschraubung angebracht werden kann, oder aber auch eine Signallampe oder ähnliches. Weitere Anschlußverschraubungen finden sich, siehe Fig. 7, bei 220 und 222. Sie dienen zum wahlweisen Hindurchführen eines Anschlußkabels 36, siehe Fig. 1, um Signale an eine Zentrale zu liefern bzw. von dieser Zentrale aufzunehmen, sowie für die Zufuhr von elektrischer Energie zum Betrieb der Steuereinheit bzw. auch zum Betrieb des Auslaßventils, das vorzugsweise elektromagnetisch angetrieben wird.

Der Aufnahmeraum 200 für die Steuerungseinrichtung kann durch einen Deckel verschlossen werden, wie er in Fig. 9 in einer Draufsicht und Fig. 10 in einer Schnittansicht dargestellt ist. Der Deckel 226 besitzt zweckmäßigerweise eine umlaufende Randnut 224, in die eine entsprechende Schulter 228, gebildet vom oberen Rand des Gehäuses 202 eingreift und so eine Fixierung und zusätzliche Abdichtung gegen Spritzwasser und Staubablagerungen ergibt. Dies entspricht nach deutscher Norm (DIN 40 050) der Schutzart IP 54.

Der Deckel besitzt an seinen vier Ecken Bohrungen 228 zum Hindurchstecken von Senkkopfschrauben, mit denen der Deckel an dem Gehäuse über entsprechende, beispielsweise viereckigen Querschnitt aufweisende gespritzte Löcher 230 eingeschraubt werden kann. In diese Löcher mit viereckigen Querschnitt schneiden die eingesetzten Schrauben sich ihr Gewinde selbst.

Eine ähnliche viereckige Einsenkung 232 wird von einer Nase 234 gebildet und dient zum Befestigen einer Platine o. ä., die sich auch auf die Schultern 236, 238 des Gehäuses 202 abstützt und die Steuereinheit o. ä. tragen kann. Diese Schultern können wiederum mit Bohrungen 240, 242 wiederum mit viereckigem Querschnitt versehen sein, in die wiederum selbst ihre Gewinde schneidende Schrauben einsetzbar sind, die die Platine o. ä. halten.

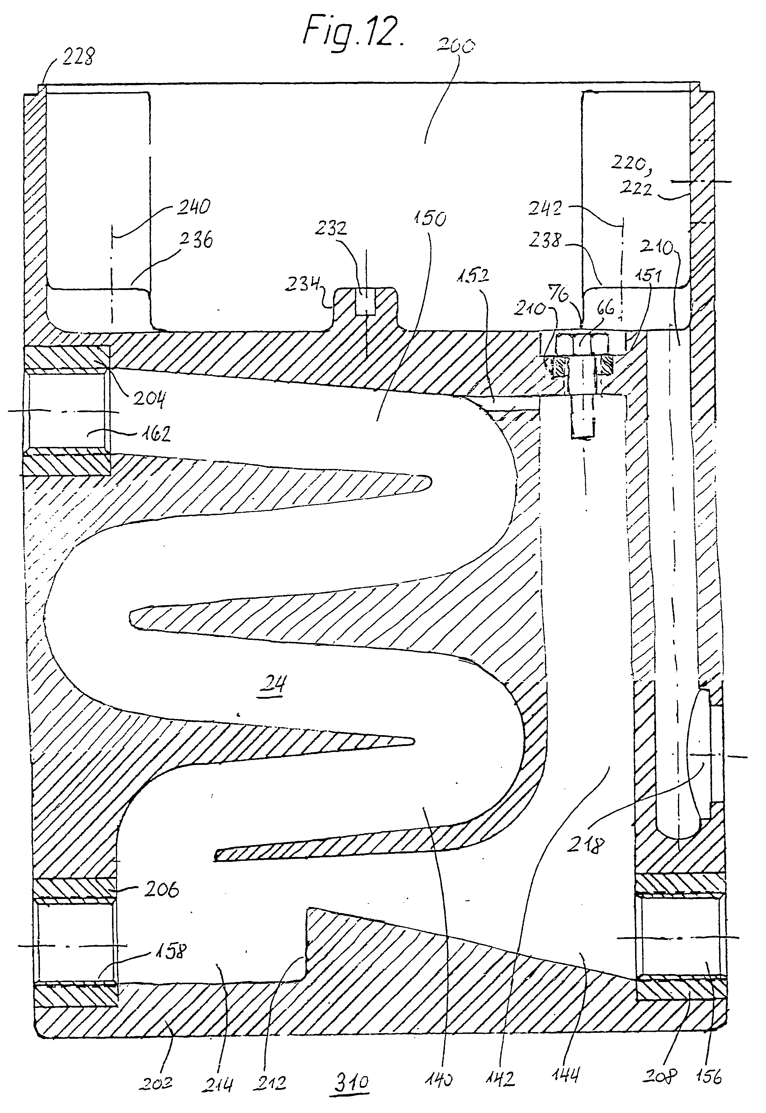

Fig. 12 zeigt eine ähnliche Anordnung 310 wie die Fig. 6, jedoch mit einer größeren Anzahl von Mäandern für den kanalförmigen Sammelraum 24.

Der Gewindeeinsatz 210 ist vorzugsweise ein eingespritzter Metallgewindeeinsatz mit dem Gewindemaß M8, in das das entsprechende Gewinde 78 des Sensors der Fig. 5 genau paßt.

Die Gewindeeinsätze 204, 206 und 208 sind vorzugsweise eingespritzte Gewindeeinsätze mit dem Maß von 1 2 Zoll, wie in der Rohrleitungstechnik bei dieser Anwendung üblich.

Bei der in Fig. 6 bzw. Fig. 12 dargestellten Ausführungsform sind die Wanddicken zwischen dem Sammelraum 24 und den Außenflächen des Gehäuses 202 größer als bei der gemäß Fig. 4 benutzten Rohrschlange, so daß hier eine Umschäumung zum Zwecke der Wärmeisolierung und der Schallisolierung entfallen kann. Das Gehäuse selbst bildet eine glatte Oberfläche und benötigt auch aus diesem Grunde keine Umschäumung, wie es bei der Ausführungsform der Fig. 4 zweckmäßig sein könnte, um das Auffangen von Schmutz und dgl. zwischen den einzelnen Schlangen zu vermeiden.

Ein weiterer Vorteil ist, daß die Flüssigkeitsbewegung im wesentlichen zweidimensional erfolgt und dadurch der Wirkungsablauf leichter von der einen bzw. der anderen Seite des Gehäuses beobachtbar ist, als es beim Gegenstand gemäß Fig. 4 der Fall ist.

## Ansprüche

1. Vorrichtung (10) zum Ableiten von Kondensat und dgl. aus Drucksystemen, wie Druckluftsysteme, die einen Sammelraum (24) für das Kondensat aufweist, der mit zumindest einem Füllstandsmesser (26) und einem von diesem automatisch gesteuerten Auslaßventil (28) versehen ist, dadurch gekennzeichnet, daß der Sammelraum von einem spiral- oder schlangenförmig ausgebildeten Leitungsstück (40) oder Verbindungskanal (140) gebildet wird, dessen unteres Ende (44, 144) in eine Steigleitung (42, 142) mündet, und dessen oberes Ende (50, 150) mit der Steigleitung (42, 142) über eine Druckausgleichsleitung (52) oder Druckausgleichskanal (152) verbunden ist, daß der Füllstandsmesser (26) von einem in der Steigleitung (42) oder dem Steigrohrkanal (142) angeordneten Fühler (66) gebildet wird, und daß das eine Ende des Leitungsstücks (40) oder des Verbindungskanals (140) mit dem Drucksystem und das andere Ende mit dem Auslaßventil (28) verbunden ist.

2. Vorrichtung nach Anspruch 1, dadurch gekennzeichnet, daß das eines Ende des Leitungsstücks oder des Verbindungskanals (40, 140) mit dem ersten Anschluß eines Verteilerstücks (46) verbunden ist, dessen zweiter Anschluß zum Auslaßventil (28) führt und dessen dritter Anschluß mit der Steigleitung oder dem Steigrohrkanal (42, 142) in Verbindung steht.

3. Vorrichtung nach Anspruch 2, dadurch gekennzeichnet, daß das Verteilerstück (46) ein Kreuzverteilerstück mit vier Anschlüssen ist, und daß der vierte Anschluß mit einem Blindstopfen versehen ist.

4. Vorrichtung nach Anspruch 1, 2 oder 3, dadurch gekennzeichnet, daß das Leitungsstück (40) bzw. Verbindungskanal (140) und die Steigleitung (42) bzw. der Steigrohrkanal (142) aus Rohrmaterial einstückig geformt bzw. aus zwei aufeinanderlegbaren Halbschalen gebildet sind.

5. Vorrichtung nach Anspruch 4, dadurch gekennzeichnet, daß bei der Ausführungsform mit spiralförmig aufgewickeltem Leitungsstück (40) die Steigleitung (42) innerhalb des von den Windungen des spiralförmig aufgewickelten Leitungsstück (40) gebildeten Zylinders verläuft, vorzugsweise nahe der inneren Zylinderwandfläche.

6. Vorrichtung nach Anspruch 4, dadurch gekennzeichnet, daß bei der Ausführungsform aus zwei aufeinanderlegbaren Halbschalen der Verbindungskanal (140) sowie der Steigrohrkanal (142) im wesentlichen rechteckigen Querschnitt aufweisen und jeweils hälftig von der einen bzw. von der anderen Halbschale gebildet werden.

7. Vorrichtung nach Anspruch 6, dadurch gekennzeichnet, daß zum Anschluß von Verschraubungen in den Halbschalen jeweils entsprechende Gewindeeinsätze (204, 206, 208) eingespritzt oder eingesetzt sind.

8. Vorrichtung nach Anspruch 6 oder 7, dadurch gekennzeichnet, daß das Rohrmaterial und das Material, aus dem die Halbschalen gebildet sind, aus schlagfestem Kunststoff, wie Polyvenylchlorid (PVC) bzw. Polycarbonat besteht.

9. Vorrichtung nach einem der Ansprüche 1 bis 8, dadurch gekennzeichnet, daß die Steigleitung (42) bzw. die Halbschalenwände im Bereich des Steigrohrkanals (142) zumindest im Bereich des Fühlers transparent sind.

10. Vorrichtung nach Anspruch 9, dadurch gekennzeichnet, daß der Fühler (66) eine Wärmefühler ist, der von oben in die Steigleitung bzw. den Steigrohrkanal (42, 142) hineinragt.

11. Vorrichtung nach einem der Ansprüche 1 bis 10, dadurch gekennzeichnet, daß die Anordnung in wärme- und/oder schallisolierendes Material, wie Hartschaum, eingehüllt ist.

12. Vorrichtung nach Anspruch 6, dadurch gekennzeichnet, daß die beiden Halbschalen einen nach oben offenen Aufnahmeraum (200) für eine elektronische Steuereinheit oder dgl. bilden, auf welchen Aufnahmeraum (200) ein Schutzdeckel (226) aufsetzbar ist.

13. Vorrichtung nach Anspruch 12, dadurch gekennzeichnet, daß zumindest die eine, vorzugsweise jede Halbschale im Bereich einer Aufnahmeraumwandung einen Durchbruch (220, 222) für eine Kabeldurchführungsmuffe oder dgl. aufweist.

14. Vorrichtung nach einem der Ansprüche 12 oder 13, dadurch gekennzeichnet, daß nahe der einen Seitenwand ein vom Aufnahmeraum (200) zu einem nach außen führenden Durchbruch (218) führender weiterer Kanal (216) mit vorzugsweise rundem Querschnitt zur Aufnahme von elektrischen Verbindungsleitungen, vorzugsweise für Betriebsenergie für ein elektromagnetisches Auslaßventil vorgesehen ist.

15. Vorrichtung nach einem der Ansprüche 12 bis 14, dadurch gekennzeichnet, daß die Halbschalen aus glasklarem Polycarbonat bestehen und miteinander verklebt oder verschweißt sind.

16. Verfahren zum Ableiten von Kondensat und dgl. aus Drucksystemen, wie Druckluftsystemen, wobei das Kondensat in einem Sammelraum mit Füllstandsmesser und Auslaßventil unter Druck stehend gesammelt und bei Erreichen eines vorbestimmten Füllstandes durch Öffnen des Auslaßventils infolge des Druckes aus dem Sammelraum über das Auslaßventil ausgestoßen wird, dadurch gekennzeichnet, daß das Kondensat beim Ausströmen aus dem Sammelraum entlang einem spiral- oder schlangenförmigen, im wesentlichen gleichbleibenden Strömungswegquerschnitt aufweisenden Strömungsweg zum Auslaßventil geführt wird.

17. Verfahren nach Anspruch 15, dadurch gekennzeichnet, daß der Strömungsweg zumindest teilweise auch zum Sammeln des Kondensats dient.

18. Verfahren nach Anspruch 15 oder 16, dadurch gekennzeichnet, daß der Strömungsweg im wesentlichen aus einem Strömungsweg oder mehreren Strömungswegabschnitten besteht, der oder die in Richtung der Schwerkraft geneigt verlaufen.

Fig.1.

Fig.2.

Fig.3.

Fig.4.

Fig.5.

# Fig.6.

# Fig. 7.

Fig.8.

230

240

236

232

234

242

238

210

76

216

140

142

Fig.9.

224

226

Fig.11.

224

228

Fig.10.

226

224

EP 0 324 976 A1

# Fig.12.

<table>
<tr><td rowspan="2">Europäisches Patentamt</td><td>EUROPÄISCHER RECHERCHENBERICHT</td><td>Nummer der Anmeldung</td></tr>
<tr><td></td><td>EP 88 12 1666</td></tr>
</table>

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-3 508 229 (VIA GESELLSCHAFT FÜR VERFAHRENSTECHNIK) <br> * Zusammenfassung; Figuren * <br> --- | 1,16 | F 16 T 1/00 |
| A | FR-A-1 154 722 (ANDERSEN) <br> * Figur 7 * <br> --- | 1,16 | |
| A | DE-B-1 095 846 (GERDTS) <br> * Spalte 4, Zeilen 6-15 * <br> --- | 1,16 | |
| A | MECHNICAL WORLD, Band 133, Februar 1953, Seiten 62-64, Manchester, GB; A.S. WADSWORTH: "Automatic drainage of compressed air systems" <br> ----- | | |

RECHERCHIERTE SACHGEBIETE (Int. Cl.4)

F 16 T

Der vorliegende Recherchenbericht wurde für alle Patentansprüche erstellt

| Recherchenort | Abschlußdatum der Recherche | Prüfer |
|---|---|---|
| DEN HAAG | 21-04-1989 | VAN GHEEL J.U.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes Dokument